# EUROPEAN PATENT APPLICATION

(11) **EP 4 697 564 A1**
(43) Date of publication of application: **18.02.2026**
(21) Application number: 25194154.8
(22) Date of filing: 05.08.2025
(51) Int. Cl.: H02K 1/18, H02K 5/22, H02K 15/028

(54) **FRAME FOR A ROTATING ELECTRICAL MACHINE**

(30) Priority: 16.08.2024 GB 202412114
(71) Applicant: Cummins Generator Technologies Limited, Peterborough PE2 6FZ (GB)
(72) Inventor: Ketteringham, Jack, Peterborough, PE2 6FZ (GB); Riley, Mark, Peterborough, PE2 6FZ (GB)
(74) Representative: Cleveland Scott York

(57) **Abstract**

A rotating electrical machine is disclosed. The rotating electrical machine comprises a rotor (2) mounted on a shaft (12), a stator (60) comprising stator windings with end leads (64), a bracket (74) which supports a bearing (71) for the shaft, and a frame (32, 34) which supports and encloses the stator. The frame comprises a first part (32) and a second part (34). An aperture (56) for the end leads (64) is formed between the first part and the second part. This can allow an impregnated stator to be inserted into the frame without the need to manipulate the end leads.

## Description

The present invention relates to a frame for a stator of a rotating electrical machine, and in particular a frame which can facilitate assembly of the machine.

Rotating electrical machines, such as motors and generators, generally comprise a rotor mounted on a shaft and arranged to rotate inside a stator. The rotor produces a rotating magnetic field which crosses an airgap between the rotor and the stator. The stator comprises a stator core which holds stator windings. The stator windings combine with the rotating magnetic field to generate an electrical output or to cause rotation.

In known rotating electrical machines, the stator is held within a stator frame. The frame is typically a component with a cylindrical interior which surrounds the stator circumferentially. The frame is used to support the stator, and to provide an enclosure for the machine. Bearings may be provided at one or both ends of the machine, in order to support the rotor shaft. The bearings may be supported by a bracket which connects to the stator frame. A terminal box may be mounted on the stator frame. The terminal box includes terminals which are used to make electrical connections to the stator windings. The stator windings include end leads which are brought out to the terminals through an aperture in the frame.

In a typical machine, the wound stator is impregnated with resin, in order to prevent movement of the stator windings and to reduce the risk of short circuits. However, once the stator has been impregnated, the end leads may become rigid, and it may be difficult to manipulate them through the frame aperture to the terminals. To address this issue, it is possible to impregnate the stator after it has been inserted in the stator frame. However, this increases the cost of the impregnation process and the amount of resin used. Furthermore, a cleaning operation may be required to remove resin from the stator frame, which adds to the cost and complexity of manufacture. In addition, larger diameter electrical cables such as those in higher power electrical machines may be difficult to manipulate through the frame aperture with or without impregnation.

In principle, it would be possible to alter the machine architecture to facilitate connection of the end leads to the terminal box. However, this may increase the overall size of the machine and may impact the machine's airflow and electromagnetic characteristics.

It has been proposed to provide flexible stator leads to connect the stator windings to the terminal box. This typically involves connecting the stator windings to separate cables using flexible connectors. However, this requires an increased number of parts and additional electrical connections. It may also require an increased internal space for the frame, and may impact machine airflow characteristics and performance.

It has also been proposed to provide an extended non-drive end bracket with an aperture for bringing the end leads to the terminal box. However, this may lead to an increased part profile, an increased mass of assembly, increased cost, and increased service access requirements, and may require alternations to other parts such as lifting lug and foot positions.

It would therefore be desirable to provide a frame which can facilitate the connection of stator end leads to terminals outside of the frame while reducing or avoiding some of the drawbacks of the previously considered techniques.

According to one aspect of the present invention there is provided a rotating electrical machine comprising:
a rotor mounted on a shaft;
a stator comprising stator windings with end leads;
a bracket which supports a bearing for the shaft; and
a frame which supports and encloses the stator,
wherein the frame comprises a first part and a second part, and an aperture for the end leads is formed between the first part and the second part.

The present invention may provide the advantage that, by forming the aperture between the first part and the second part, the end leads can be brought more easily to terminals outside of the frame, without the need to manipulate cables through the aperture and without the need to provide flexible cables.

Furthermore, it may be possible to impregnate the stator with resin before it is inserted into the frame. This may reduce the cost of the impregnation process and the amount of resin used, and may avoid the need for a cleaning operation to remove resin from the frame after impregnation. The present invention may therefore reduce the cost and complexity of manufacture, in comparison to previous techniques.

The frame is preferably a component which is able to support and/or enclose the stator and/or other parts of the rotating electrical machine. The end leads are preferably leads which allow an electrical current to be provided to or from the stator windings. The end leads may be part of, or electrically connected to, the stator windings. The aperture is preferably an opening in the frame which can allow the end leads to pass from inside the frame to outside the frame. By "formed between the first part and the second part" it is preferably meant that each of the first part and the second part forms at least one edge of the aperture. Thus, the aperture may have a perimeter which is formed by both the first part and the second part. The stator may be provided inside the frame. The end leads may pass through the aperture.

In the case of a generator, the bracket may be a non-drive end bracket. The bracket may be attached to the frame. The bracket supports a bearing for the rotor shaft, and may also support one or more other components, such as an exciter stator. This may allow some components, such as an exciter, to be at least partially accommodated within the frame. As a consequence, splitting the frame into two parts need not add any unnecessary length to the frame. In some cases, it may be possible to omit the bracket, in which case the bearing may be connected to another component, such as part of the frame.

The first part and the second part are preferably separate parts which are connectable together. At least one of the first part and the second part may be arranged to receive the stator when the two parts are not connected. The first part and the second part may then be connected together, to form an enclosure around the stator and/or other parts of the machine.

The aperture may be formed by providing a recess in an edge of at least one of the first part and the second part. For example, an edge at one end axially of either the first part or the second part (or both) may be recessed to form the aperture. The aperture may also extend part way circumferentially around at least one of the first part and the second part, at one end axially thereof. This may facilitate entry of the end leads into the aperture in an axial direction when the two parts are not connected.

The aperture may be open on at least one side when the first part and the second part are not connected. This may facilitate insertion of the end leads into the aperture in an axial direction, without requiring the end leads to be bent or manipulated through the aperture.

The aperture may be closed on all sides when the first part and the second part are connected together. For example, the open side may be closed by one of the first part and the second part when the two parts are connected together. This may help to ensure that the end leads are contained when the frame has been assembled.

The aperture may be arranged such that, when the stator is inserted into one of the first part and the second part, the ends leads are able to enter the aperture in an axial direction, for example through an open side of the aperture. This may allow the end leads to be inserted into the aperture without requiring them to be bent or manipulated. Thus, this may facilitate the insertion of an impregnated stator with rigid end leads into the frame.

In one embodiment, the frame is split axially into the first part and the second part. This may allow an aperture with an open side to be formed at one end axially of the first part and/or the second part, which may facilitate insertion of the end leads into the aperture. For example, the frame may be split in a plane which is substantially perpendicular to an axis of rotation of the rotating electrical machine. However, it would also be possible to split the frame along a plane which is at a non-zero angle to the axis of rotation. Furthermore, the frame need not necessarily be split along a plane, and may for example be split along lines which are curved, waved, serrated, castellated, or any other shape.

The frame may be arranged such that the first part extends axially through a greater part of the frame than the second part. For example, the first part may extend through at least 60%, 70%, 80% or 90% of the frame in an axial direction, although other values are also possible. In this case, the second part may extend through not more than 40%, 30%, 20% or 10% of the frame in an axial direction, although other values are also possible. This may help to ensure that the aperture is provided at the appropriate location for the end leads, and may allow the first part to provide the main support for the stator.

The first part and/or the second part may have an interior which is substantially cylindrical. This may allow the first part and/or the second part to accommodate at least part of the rotating electrical machine, for example, the stator and/or other components such as an exciter. For example, the first part and the second part may be substantially in the form of open cylinders. However, other arrangements are also possible. For example, in some arrangements, the exterior of the first part and/or second part may be substantially cuboid or any other appropriate shape.

The first part and the second part may have a dimension which is substantially the same in a radial direction. For example, when the axis of rotation is horizontal, the first and second part may have a height and/or a width (in a radial direction) which are substantially the same. Where the first part and second part are substantially cylindrical, they may have substantially the same diameter. This may allow the assembled frame to have a substantially continuous profile.

In one embodiment, the first part is a frame structure which is arranged to support the stator. The frame structure may be arranged to surround at least part of or a majority of the stator. For example, the frame structure may have an interior which is substantially cylindrical, and may be arranged to surround at least part of the stator circumferentially. Thus, the frame structure may provide an enclosure for at least part of the stator.

The aperture may be provided at one end axially of the frame structure. This may allow the aperture to be provided at a location corresponding to the positioning of the end leads on the stator.

The frame structure may comprise landing bars for supporting the stator. For example, a plurality of landing bars may be provided on an inner surface of the frame structure. The landing bars may run axially through the frame structure. The landing bars may be arranged to engage with an outside surface of the stator, in order to hold the stator in place.

When the frame is separated into the two parts, some rigidity may be lost. To help compensate for this, the frame structure may comprise additional stiffening means. In one embodiment, the frame structure comprises an internal stiffening ring. The internal stiffening ring may run circumferentially around the inside of the frame structure. The stiffening ring may be provided towards one end axially of the frame structure (preferably the end with the aperture). This may help to limit deformation of the frame structure for example during machining stages while the frame is being fabricated and/or during other stages of assembly.

In one embodiment, the second part is a ring structure which is arranged to be attached to one end axially of the frame structure. The ring structure may have an interior which is substantially cylindrical, although other configurations are also possible. The exterior of the ring structure may have the same shape as the frame structure. For example, where the frame structure is substantially cylindrical, the ring structure may be substantially cylindrical. In this case, the ring structure and the frame structure may have substantially the same diameter. In general, the profile of the ring structure when viewed axially may be substantially the same as that of the frame structure.

The second part may form part of the enclosure for the rotating electrical machine. For example, the second part may be arranged to surround a rotating component of the rotating electrical machine. As an example, the second part may be arranged to at least partially surround an exciter for providing excitation to the rotating electrical machine. This may allow the frame to be separated into two parts without requiring the frame to be longer than would otherwise be the case.

The two parts of the frame may be connectable by any suitable means, such as bolts, clamps, rivets, welds, brazing, or any other means. This can help to ensure that the frame has the required mechanical stiffness.

In one embodiment, at least one of the first part and the second part comprises a flange at one end axially for connecting the second part to the first part. Thus, for example, the frame structure may comprise a flange at one end axially for connecting the frame structure to the ring structure and/or the ring structure may comprise a flange at one end axially for connecting the ring structure to the frame structure. The or each flange may be substantially annular and/or may extend substantially in a radial direction. The or each flange may comprise bolt holes for connecting the two parts together.

In one embodiment, the second part comprises a flange for connecting the frame to the bracket. The flange may be provided at one end axially of the second part, for example, the opposite end to that which is to be connected to the first part.

The rotating electrical machine may further comprise a saddle for supporting a terminal box. The saddle may be provided on the frame, and may provide an interface between the frame and the terminal box. This may allow the terminal box to be added after the frame has been assembled. The saddle may at least partially surround the aperture.

Where a saddle is provided, part of the saddle may be removable. For example, the saddle may have a removable end panel, which may be provided at one end axially of the saddle. The removable end panel may be disconnected from the saddle prior to insertion of the stator into the first part of the frame. This may allow the end leads to be inserted into the aperture and the saddle without requiring the end leads to be bent. The removable end panel may be connected to the saddle after the stator has been inserted into the first part of the frame.

Alternatively, the terminal box may be connected directly to the frame. In this case, the terminal box may include a removable part, to allow the stator to be inserted into the frame without requiring the end leads to be bent.

The frame may further comprise a plurality of feet for supporting the frame. In one embodiment, the plurality of feet are provided on the frame structure. The ring structure may be arranged to be supported by the frame structure. Thus, the ring structure itself need not include feet.

The frame may further comprise one or more lifting points to allow the frame and/or parts thereof to be lifted. The lifting points may be provided on the frame structure, or the ring structure, or both.

The rotating electrical machine may comprise terminals for connecting the stator windings to an electrical load or a power source. The terminals may be provided outside the frame, for example, in an external terminal box. The end leads may be connectable to the terminals. For example, the end leads may extend radially outwards from the stator, through the aperture to the terminals.

The terminals may be provided within an enclosure such as a terminal box. The terminal box may be any appropriate shape, such as a cuboid (e.g. a rectangular cuboid or any other cuboid) or any other shape. The terminal box may be mounted on a terminal box saddle. The terminal box may comprise other components such as an automatic voltage regulator (AVR). The terminal box may allow a user to make connections to the terminals and/or reconfigure the winding arrangement. The terminal box may comprise one or more removable panels to allow access.

The end leads may extend radially outwards from the stator. When the stator is being inserted into the frame during assembly, the radially extending end leads may be able to enter the aperture in an axial direction through an open side of the aperture. Thus, the aperture may be arranged such that the end leads can enter the aperture in an axial direction as the stator is inserted into the first part of the frame. When the stator has been inserted into the frame, the end leads may extend radially outwards from the stator, through the aperture to the terminals.

The stator may be impregnated, for example, with resin. The end leads may be rigid, for example, as a consequence of the impregnation process. Preferably the stator is impregnated prior to insertion of the stator into the first part of the frame.

The rotating electrical machine may be a generator, such as a synchronous generator. In this case, the end leads may be used to provide the generator outputs. The rotating electrical machine may be a three-phase machine, although a different number of phases, such as a single phase, are also possible. The rotating electrical machine may comprise an exciter for supplying excitation to rotor windings. The exciter may comprise an exciter rotor, which may be connected to the shaft, and an exciter stator, which may be connected to the bracket.

Corresponding methods may also be provided. Thus, according to another aspect of the invention there is provided a method of assembly a rotating electrical machine, the rotating electrical machine comprising a stator and a stator frame, wherein the stator comprises stator windings with end leads, the frame comprises a first part and a second part, and an aperture for the end leads is formed between the first part and the second part, the method comprising:
impregnating the stator;
inserting the impregnated stator into the first part of the stator frame such that the end leads enter the aperture in an axial direction through an open side of the aperture; and
connecting the first part to the second part to close the open side of the aperture.

The method may comprise impregnating the stator with resin prior to inserting the stator into the first part of the stator frame. The end leads may be rigid. The stator may be inserted into the stator without bending the end leads. The method may further comprise connecting the end leads to terminals outside of the stator, for example, in a terminal box.

The method may further comprise inserting the stator into the first part of the stator frame such that the end leads enter a terminal box or terminal box saddle through an open part of the terminal box or terminal box saddle, and closing the open part of the terminal box or terminal box saddle with an end panel after the stator has been inserted into the first part of the frame.

The method may also comprise connecting a bracket to the first part of the frame. The bracket may support a bearing for a rotor shaft.

Features of one aspect of the invention may be provided with any other aspect. Apparatus features may be provided with method aspects and vice versa.

In the present specification, terms such as "radial", "axial", "circumferential" etc. are generally defined with reference to the axis of rotation of the rotating electrical machine, unless the context implies otherwise.

Preferred features of the present invention will now be described, purely by way of example, with reference to the accompanying drawings, in which:
Figure 1 shows parts of a rotating electrical machine;
Figure 2 shows parts of a stator frame assembly in an embodiment of the invention;
Figure 3 shows an end view of a stator;
Figure 4 shows the stator frame assembly after insertion of the stator;
Figure 5 shows some parts which may be connected to a non-drive end of a machine; and
Figure 6 shows the machine after the assembly of the parts shown in Figure 5.

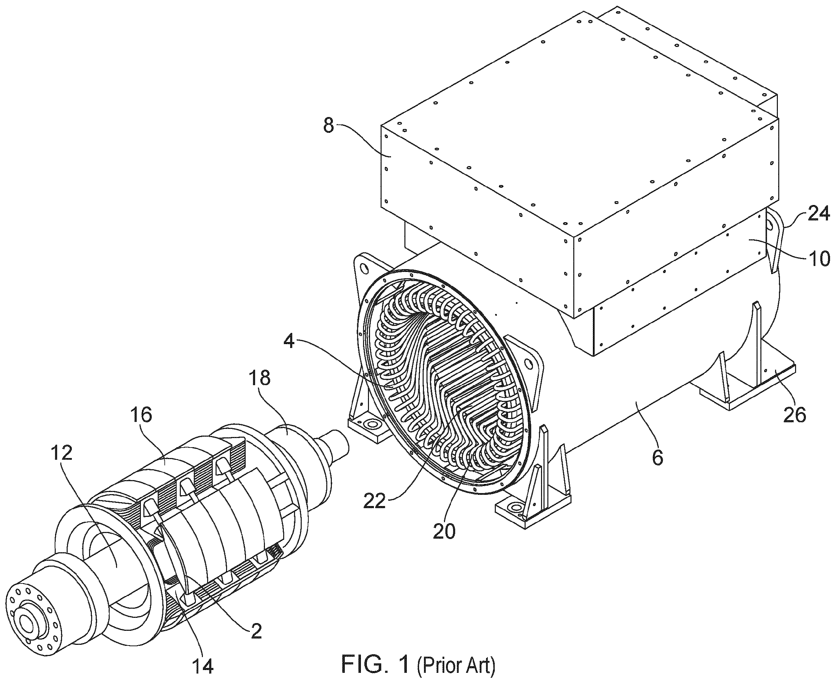

Figure 1 shows parts of an example rotating electrical machine. In this example the machine is an electrical generator and is viewed from the drive end. Referring to Figure 1, the machine comprises a rotor 2, a stator 4, a stator frame 6, a terminal box 8 and a terminal box saddle 10. In Figure 1, the rotor 2 is shown outside of the stator 4 for clarity. The rotor 2 comprises a rotor shaft 12 and rotor windings 14 which are wound on rotor poles 16. In this example, the rotor also includes an exciter rotor 18 at the non-drive end of the rotor shaft 12. The stator 4 comprises stator windings 20 which are accommodated in stator slots 22. The stator windings 20 include end windings which extend out of the stator slots 22 and run circumferentially around the end of the stator. The stator 4 is accommodated in the stator frame 6. In this example the stator 4 and the stator frame 6 are substantially cylindrical, although other shapes are possible. The terminal box 8 is provided on the stator frame. End leads from the stator windings 20 pass through an aperture in the stator frame 6 to terminals in the terminal box 8. The terminals provide a connection point between the stator windings 20 and the electrical load. The terminal box 8 sits on the terminal box saddle 10. The stator frame 6 also includes a plurality of lifting points 24 and a plurality of feet 26.

During assembly, the stator 4 is wound with the stator windings 20, and then inserted into the stator frame 6. The end leads are passed through the aperture in the stator frame 6 and connected to the terminals in the terminal box 8. The rotor 2 is then inserted into the stator 4.

In a typical machine, the stator is impregnated with resin to fill any voids and provide electrical insulation. This helps to prevent movement of the windings and reduces the risk of short circuits, and may help to extend the operating life of the machine. However, once the stator has been impregnated, it may be difficult to manipulate the end leads through the aperture in the stator frame. This is particularly the case with high power machines with larger diameter wires. As a consequence, it may be necessary to impregnate the stator after it has been inserted into the stator frame.

However, impregnating the stator together with the stator frame requires a larger volume impregnation tank, and increases the amount of resin used. Furthermore, it may be necessary to grease the frame before impregnation, and then to remove the grease and resin after impregnation. This increases the cost and complexity of the manufacturing process.

In embodiments of the invention, a modified frame assembly is provided which allows for pressing of an impregnated stator with rigid stator leads into the frame assembly. An additional ring structure is provided to complete the enclosure.

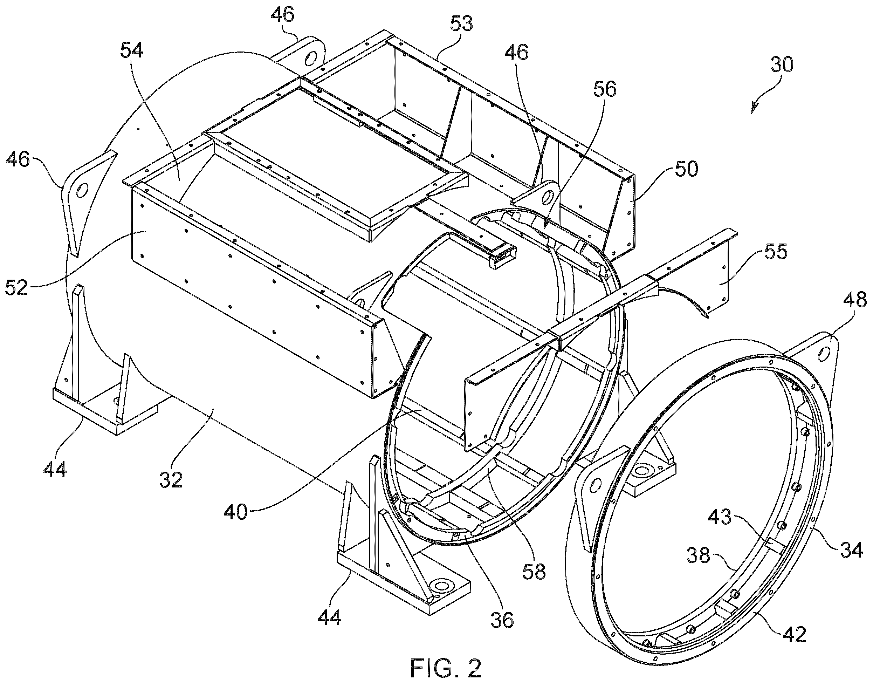

Figure 2 shows parts of a stator frame assembly in an embodiment of the invention. The frame assembly is arranged to support and to enclose the stator of a rotating electrical machine. The frame assembly may be fabricated, for example, from a metal such as steel, although other materials and techniques may be used instead or as well. In this example the machine is an electrical generator, and the stator frame assembly is viewed from the non-drive end (NDE).

Referring to Figure 2, the frame assembly 30 comprises a stator frame which is split axially into two parts 32, 34. The first part is a frame structure 32 which is arranged to surround, circumferentially, all or a major part of the stator. The second part is a ring structure 34 which is arranged to be attached to one end axially of the frame structure 32. In this embodiment, the frame structure 32 and the ring structure 34 are both substantially cylindrical and have substantially the same diameter, although other arrangements are also possible. The frame structure 32 has a length in the axial direction which is greater than that of the ring structure 34. For example, the frame structure 32 may extend through approximately 90% of the total length of the frame assembly in an axial direction and the ring structure 34 may extend through approximately 10% of the total length of the frame assembly in an axial direction, although other values are possible.

The frame structure 32 comprises a generally cylindrical body which is arranged to accommodate the stator. The frame structure 32 includes landing bars 40 on its inside surface. In the arrangement shown, the landing bars 40 run in an axial direction from one end of the frame structure 32 to the other. However, the landing bars do not need to extend through the full length of the frame, and they could end prior to the drive end flange and/or the non-drive end flange. The landing bars 40 are arranged to engage with the stator in order to hold the stator in place within the frame structure. The frame structure 32 also includes a flange 36 at one end axially. The flange 36 is generally annular. In the arrangement shown, the flange 36 extends radially inwards from the non-drive end of the frame structure 32, although it could extend radially outwards, or both inwards and outwards. The flange 36 presents a mating surface to the ring structure 34. Although not shown in Figure 2, the opposite end of the frame structure 32 (the drive end) comprises a mating surface for attaching the frame assembly 30 to another component such as an adaptor or a drive end bracket, in a known manner.

The ring structure 34 comprises a generally cylindrical body with a first flange 38 at one end axially and a second flange 42 at the other end axially. The first flange 38 is provided at the end of the ring structure towards the frame structure (the drive end side). The first flange 38 is annular. In the arrangement shown, the first flange 38 extends radially inwards from the cylindrical body, although it could extend radially outwards, or both inwards and outwards. A plurality of bolt holes are provided at spaced locations circumferentially about the first flange 38. The first flange 38 presents a mating surface to the frame structure 32, and is arranged to be connected to the flange 36 on the frame structure 32 using bolts. The second flange 42 is annular, and extends radially inwards from the cylindrical body at the end of the ring structure 34 away from the frame structure 32 (the non-drive end side). A plurality of bolt holes are provided at spaced locations circumferentially about the second flange 42. The second flange 42 provides an end face for the frame assembly 30 to which other components, such as a non-drive end bracket, can be attached. A plurality of cross members 43 are provided on the inside surface of the main body of the ring structure 34. The cross members 43 run axially between the first flange 38 and the second flange 42, and help to strengthen and stiffen the ring structure 34.

The frame assembly 30 also comprises a plurality of feet 44. The feet 44 are provided on the lower side of the frame structure 32, and are used to mount the frame structure 32 on a surface. In addition, a plurality of lifting points 46 are provided on the upper side of the frame structure 32. In this example, two lifting points 46 are provided towards each end axially of the frame structure 32. Two lifting points 48 are also provided on the ring structure 34.

The frame assembly 30 of Figure 2 also comprises a terminal box saddle 50. The terminal box saddle 50 is arranged to sit on the curved upper surface of the frame structure 32, and to provide a flat surface on which a terminal box can be mounted. The terminal box saddle 50 comprises two side panels 52, 53 and two end panels 54, 55. The side panels 52, 53 are substantially rectangular in shape, and extend in a generally axial and tangential direction (relative to the axis of rotation of the machine). The two end panels 54, 55 are perpendicular to the side panels, and have C-shaped recesses to allow them to sit on the curved upper surface of the frame structure 32. Each of the side panels 52, 53 and end panels 54, 55 has a flange on its upper surface which provides a flat surface for the terminal box (not shown in Figure 2). In the arrangement shown, the flanges on the side panels 52, 53 extend tangentially inwards and the flanges on the end panels 54, 55 extend tangentially outwards, although in each case the flange may extend inwards or outwards, or both.

In the arrangement of Figure 2, the frame structure 32 comprises an aperture 56 for bringing end leads from the stator to terminals in the terminal box. The aperture 56 is in the form of a recess which extends axially inwards from one end of the frame structure 32 (the end which faces the ring structure). The aperture extends circumferentially through an upper part of the frame structure. The aperture 56 is located inside an area which is enclosed by the terminal box saddle 50. The aperture 56 is formed by removing part of the material which is used for the body of the frame structure 32 and the flange 36. Thus, the flange 36 is discontinuous in the area of the aperture 56.

The frame structure 32 and the ring structure 34 are provided initially as two separate parts. When the ring structure 34 is not connected to the frame structure 32, the aperture 56 is open on one side (the side facing the ring structure). The open side of the aperture 56 allows end leads to enter the aperture in an axial direction as the stator is inserted into the frame structure 32.

In the arrangement of Figure 2, one of the end panels of the terminal box saddle 50 is removable. The removable end panel 55 is located at one end axially of the frame structure 32 (the end facing the ring structure 34). When the removable end panel 55 is not attached to the rest of the terminal box saddle, one side of the terminal box saddle 50 is open.

When the ring structure 34 is not connected to the frame structure 32, the frame structure 32 presents an open end into which the wound stator can be inserted. The stator is inserted axially into the frame structure 32 from the non-drive end side. The aperture 56 has an open side which allows end leads to enter the aperture in an axial direction, without requiring the end leads to be bent or manipulated. Furthermore, one side of the terminal box saddle 50 is open, which allows the end leads to enter the terminal box saddle in an axial direction.

In a conventional frame, a certain degree of rigidity is provided by the end of the frame. However, if the frame is split into two in the manner shown in Figure 2, then some of this rigidity may be lost. In order to help compensate for this loss of rigidity, in the arrangement of Figure 2, an additional ring 58 is added to the inside of the frame structure 32. The additional ring 58 provides additional strength and rigidity, particularly prior to connection of the ring structure 34. This can help to limit deformation of the frame during machining stages while the frame is being fabricated and during other stages of assembly.

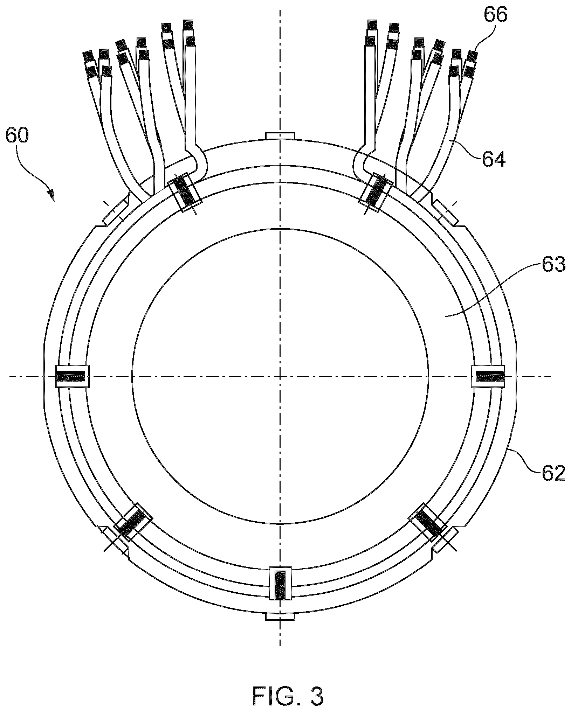

Figure 3 shows an end view of an exemplary stator. In this example, the stator is viewed from the non-drive end side. Referring to Figure 3, the stator 60 comprises a generally cylindrical stator core 62 which has stator slots on its radially inward side. The stator slots are wound with stator windings 63. The stator windings 63 include end windings which extend axially out of the stator slots and around the outside of the stator core. The stator windings also include end leads 64 for connecting the stator windings to terminals in a terminal box. The end leads 64 are grouped in phases ready for connection to the appropriate terminals. The end leads 64 are routed circumferentially around the end of the stator to a position where they will align with the terminals. The end leads 64 then extend outwards in a generally radial direction, beyond the outer envelope of the stator core 62. The end leads 64 are provided with connectors 66 for connection to the terminals in the terminal box. The stator may be, for example, as disclosed in WO 2020/079408 A1, the subject matter of which is incorporated herein by reference, although other arrangements are also possible.

After the stator 60 has been wound, and prior to insertion of the stator into the stator frame, the stator is impregnated with resin. This may be achieved by standing the wound stator in an impregnation tank and slowly filling the tank with liquid resin. The stator is then removed from the tank, and a heating/curing process is used to solidify the resin. Alternatively, other techniques such as a trickle process or vacuum pressure impregnation may be used instead or as well. Once cured, the resin helps to prevent movement of the windings and reduces the risk of short circuits.

The impregnated stator 60 is then inserted into the frame structure 32. Insertion of the stator 60 into the frame structure 32 is carried out with the ring structure 34 detached from the main frame structure 32, and the removable end panel 55 detached from the terminal box saddle 50.

During the insertion process, one end of the stator (away from that with the end leads) is first presented to the open end of the frame structure 32. As the stator 60 is inserted into the frame structure 32, the landing bars 40 engage with the outer surface of the stator core 62. The stator 60 is then pressed into the frame structure 32 in an axial direction. As the stator 60 nears full insertion into the frame structure, the stator end leads 64 enter the aperture 56 axially through the open side of the aperture. The end leads 64 also enter axially into the terminal box saddle 50, through the open side of the terminal box saddle formed by removing the removable panel 55. This can allow the end leads 64 to enter the aperture 56 and the terminal box saddle 50 in an axial direction, without the need for them to be bent or manipulated through a closed aperture.

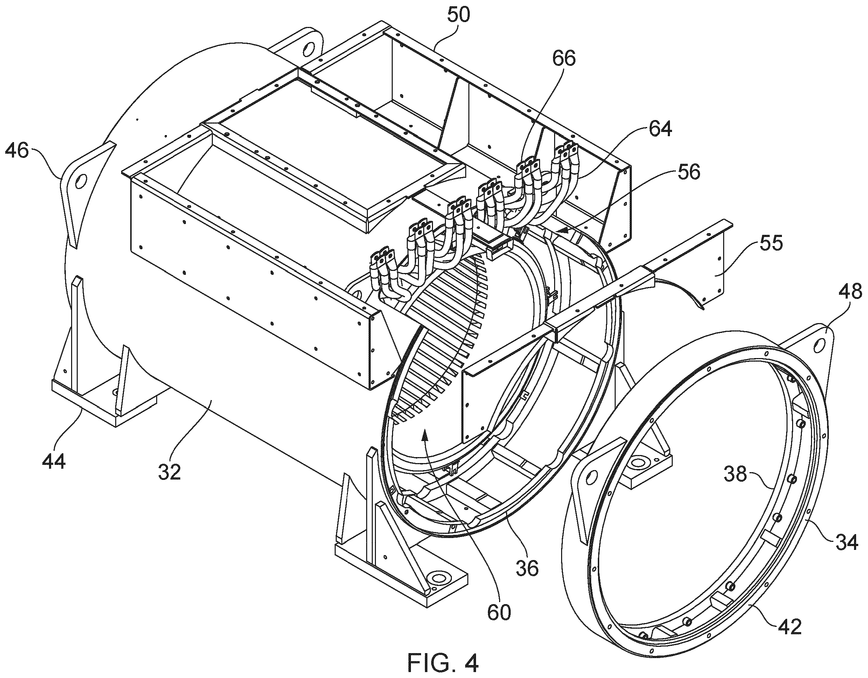

Figure 4 shows the stator frame assembly after insertion of the stator. Referring to Figure 4, the stator 60 is accommodated within the frame structure 32. The end leads 64 extend through the aperture 56 and the terminal box saddle 50. The end leads 64 are thus in a position where they can be connected to terminals in a terminal box using the connectors 66.

Once the stator has been inserted into the frame structure, the frame structure 32 and the ring structure 34 are brought together, so that the flange 36 on the frame structure mates with the flange 38 on the ring structure. The ring structure 34 comprises a locating feature, such as a spigot ring, to locate the ring structure within the frame structure when it is assembled. The ring structure 34 is then bolted to the flange structure 32, using bolts which pass through holes in the flanges 36, 38. The bolts are accessible through the open end of the ring structure 34. The bolted joints secure the two individual structures together, acting as a permanent, non-serviceable connection. When the two structures 32, 34 are connected, the sides of the aperture 56 are closed, with one side of the aperture being formed by an edge of the ring structure 34.

The removable panel 55 is connected to the terminal box saddle 50 to close the terminal box saddle. Sealing material or a membrane may be used to achieve the desired ingress protection (IP) rating. The end leads 64 then extend through the closed aperture 56 and the closed terminal box saddle 50. The terminal box can then be assembled on the terminal box saddle, and the end leads 64 connected to the terminals.

In the assembled state, the frame structure 32 is supported by the feet 44, and the ring structure 34 is supported by the frame structure 32. In addition, the entire assembly may be lifted using the lifting points 46, 48.

In one embodiment, following assembly of the ring structure 34 to the frame structure 32, a non-drive end bracket is attached to the second flange 42 on the ring structure 34. The non-drive end bracket may support a bearing for the rotor and/or other components such as an exciter stator. This can allow some non-drive end components, such as an exciter, to be at least partially accommodated within the ring structure 34. As a consequence, the ring structure 34 need not add any unnecessary length to the machine.

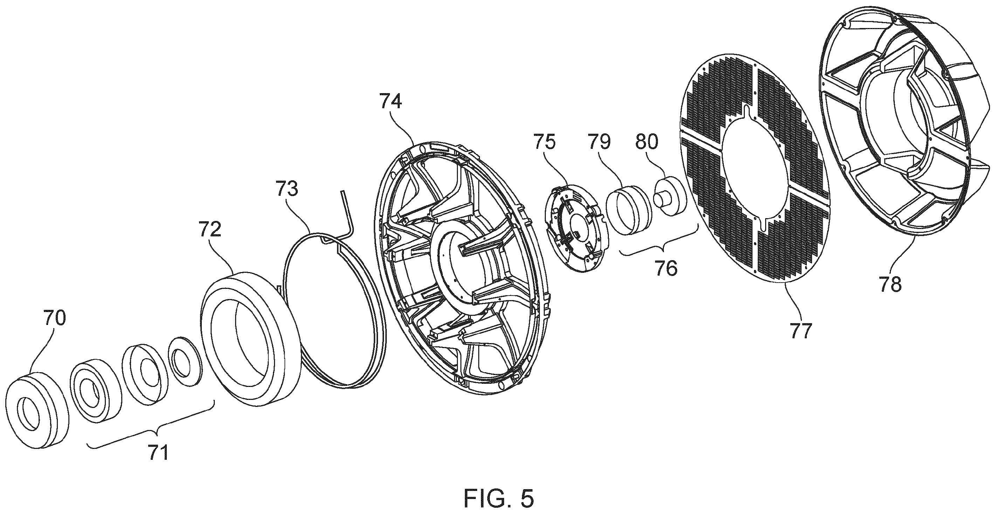

Figure 5 shows some of the parts which may be connected to the non-drive end of the machine in one example. Referring to Figure 5, the non-drive end components comprise non-drive end bearing cartridge 70, non-drive end bearing 71, exciter stator 72, anti-condensation heater 73, non-drive end bracket 74, bearing cap 75, permanent magnet generator (PMG) 76, air inlet screen 77 and air inlet cover 78. The PMG 76 comprises PMG stator 79 and PMG rotor 80. It will be appreciated that the parts on Figure 5 are shown by way of example only, and some of the parts may be omitted and/or other parts provided as well or instead. Furthermore, the placement and order of the parts may vary. For example, the PMG 76 may be located on the other side of the non-drive end bracket 74.

When assembled, the bearing cartridge 70, bearing 71, exciter stator 72 and anti-condensation heater 73 are attached to the non-drive end bracket 74 on the drive side (towards the main stator 60). The bearing cap 75, PMG stator 79 and air inlet cover 78 are attached to the non-drive end bracket 74 on the non-drive side (away from the main stator 60). The non-drive end bracket 74 is attached to the second flange 42 on the ring structure 34. The PMG rotor 80 is attached to the rotor shaft 12 at the non-drive end of the rotor 2 (see Figure 1). The air inlet cover 78 houses the PMG 76 and the air inlet screen 77. Once assembled, the ring structure 34 surrounds the exciter (comprising exciter stator 72 and exciter rotor 18), although the exciter may also extend partially into the frame structure 32.

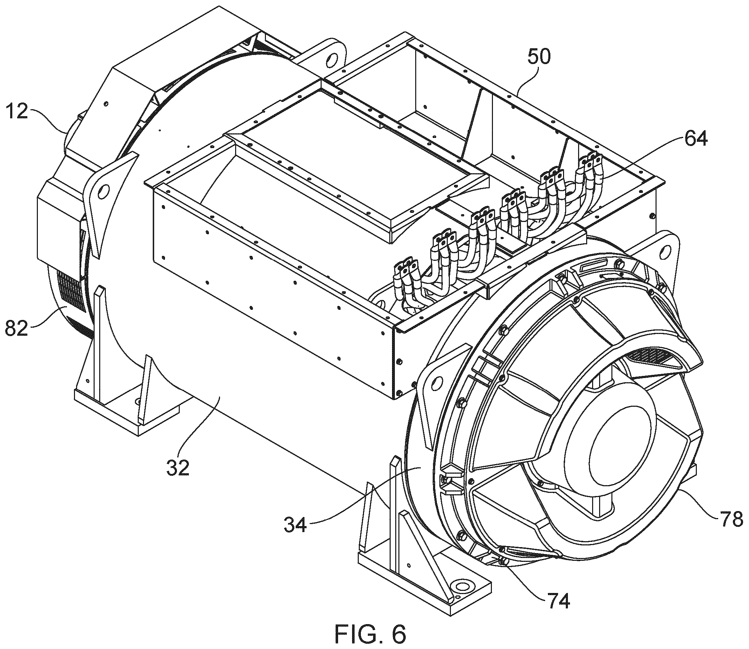

Figure 6 shows the machine after the assembly of the parts shown in Figure 5. Also shown in Figure 6 is a drive end bracket 82 which supports a drive end bearing which supports the shaft 12. Alternatively, the machine could be of a single bearing design, with the prime mover supporting the drive end of the shaft.

The split frame structure described above can allow an impregnated stator with fixed stator cable positions to be pressed into the frame. This can avoid the need to bend or manipulate the stator cables through a closed aperture, and avoid the need to impregnate the stator after it has been inserted into the stator frame.

It will be appreciated that embodiments of the present invention have been described by way of example only, and variations in detail may be made. For example, in some embodiments, the aperture may be at least partially provided in the ring structure. Furthermore, the size, shape and/or placement of the aperture may vary from that shown. In some embodiments, the terminal box saddle may be omitted, and the terminal box may sit directly on the frame. In this case, at least one side panel of the terminal box may be removable to allow insertion of the end leads. In some embodiments, the frame structure and/or the ring structure may have a shape which is non-cylindrical. In some embodiments, the frame may be split in a plane which is at a non-zero angle to the radial direction. In some embodiments, the interface between the frame structure and the ring structure may be non-planar. For example, castellations could be provided on the end surface of the frame structure and/or the ring structure. In some embodiments, the ring structure could be provided at the drive end of the frame structure. Although embodiments of the invention have been described with reference to an electrical generator, the invention is also applicable to a motor. Other modifications in detail will be apparent to the skilled person within the scope of the appended claims.

## Claims

1. A rotating electrical machine comprising:
a rotor (2) mounted on a shaft (12);
a stator (4) comprising stator windings (20) with end leads (64);
a bracket (74) which supports a bearing for the shaft; and
a frame which supports and encloses the stator,
wherein the frame comprises a first part (32) and a second part (34), and an aperture (56) for the end leads is formed between the first part and the second part.

2. A rotating electrical machine according to claim 1, wherein the aperture (56) is formed by a recess in an edge of at least one of the first part and the second part.

3. A rotating electrical machine according to claim 1 or 2, wherein the aperture (56) is arranged such, when the stator is inserted into one of the first part and the second part, the ends leads (64) are able to enter the aperture in an axial direction.

4. A rotating electrical machine according to any of the preceding claims, wherein the frame is split axially into the first part (32) and the second part (34).

5. A rotating electrical machine according to any of the preceding claims, wherein the first part (32) and the second part (34) have a dimension which is substantially the same in a radial direction.

6. A rotating electrical machine according to any of the preceding claims, wherein the first part is a frame structure arranged to support the stator.

7. A rotating electrical machine according to claim 6, wherein the frame structure comprises landing bars (40) for supporting the stator.

8. A rotating electrical machine according to claim 6 or 7, wherein the frame structure comprises an internal stiffening ring (58).

9. A rotating electrical machine according to any of claims 6 to 8, wherein the second part (34) is a ring structure which is arranged to be attached to one end axially of the frame structure.

10. A rotating electrical machine according to any of the preceding claims, further comprising a saddle (50) for supporting a terminal box, wherein part of the saddle is removable.

11. A rotating electrical machine according to any of the preceding claims, further comprising terminals for connecting the stator windings to an electrical load or a power source, wherein the end leads (64) extend radially outwards from the stator, through the aperture to the terminals.

12. A rotating electrical machine according to claim 11, further comprising a terminal box (8) for accommodating the terminals.

13. A rotating electrical machine according to any of the preceding claims, wherein the stator is impregnated with resin prior to insertion of the stator into the frame.

14. A rotating electrical machine according to any of the preceding claims, wherein the end leads (64) are rigid.

15. A method of assembly a rotating electrical machine, the rotating electrical machine comprising a stator and a stator frame, wherein the stator comprises stator windings (20) with end leads (64), the frame comprises a first part (32) and a second part (34), and an aperture (56) for the end leads is formed between the first part and the second part, the method comprising:
impregnating the stator;
inserting the impregnated stator into the first part (32) of the stator frame such that the end leads (64) enter the aperture (56) in an axial direction through an open side of the aperture; and
connecting the first part (32) to the second part (34) to close the open side of the aperture.
